# FASCICULE DE BREVET EUROPEEN

(11) **EP 2 951 904 B1**
(45) Date de publication et mention de la délivrance du brevet: **29.05.2019**
(21) Numéro de dépôt: 14705830.9
(22) Date de dépôt: 20.01.2014
(51) Int. Cl.: H02J 4/00, B64D 41/00

(54) **PROCEDE ET SYSTEME D'ALIMENTATION EN ENERGIE ELECTRIQUE D'UN AERONEF**
VERFAHREN UND SYSTEM ZUR VERSORGUNG EINES FLUGZEUGS MIT ELEKTRISCHER ENERGIE
METHOD AND SYSTEM FOR SUPPLYING AN AIRCRAFT WITH ELECTRICAL POWER

(30) Priorité: 30.01.2013 FR 1350769
(43) Date de publication de la demande: 09.12.2015
(73) Titulaire: Safran Power Units, 31200 Toulouse (FR)
(72) Inventeur: RIDEAU, Jean-François, F-31170 Tournefeuille (FR); DALMAS, Florent, F-31380 Garidech (FR)
(74) Mandataire: Gevers & Orès
(86) Numéro de dépôt international: PCT/FR2014/050097
(87) Numéro de publication internationale: WO 2014/118454

(56) Documents cités:
- FR-A1- 2 931 801
- US-A- 5 583 419
- US-A1- 2012 091 789

## Description

### DOMAINE TECHNIQUE GENERAL ET ART ANTERIEUR

La présente invention concerne le domaine de l'alimentation électrique d'un aéronef et, plus particulièrement, un procédé et un système de gestion du réseau d'alimentation électrique d'un aéronef.

Un aéronef comporte de manière classique un réseau d'alimentation électrique afin d'alimenter les divers équipements de l'aéronef (actionneurs mécaniques, commandes de vol, système multimédia des sièges pour passagers, ventilation de la cabine, etc.). D'un point de vue électrique, un équipement de l'aéronef est considéré comme une charge qui consomme de l'énergie électrique.

Afin de permettre une gestion raisonnée de l'énergie électrique dans le réseau d'alimentation électrique, les charges ont deux natures possibles : les charges dites « essentielles » qui sont importantes pour le fonctionnement de l'aéronef (commande de vol, etc.) et les charges dites « non essentielles » qui sont moins importantes pour le fonctionnement de l'aéronef (système multimédia des sièges pour passagers, ventilation de la cabine, etc.). Les charges sont également ségréguées selon leur installation géographique pour être alimentées par les sources les plus proches, et éviter, autant que possible, la perte de redondance et/ou d'équipements fonctionnellement connexes.

Le réseau d'alimentation électrique comporte de manière classique une source principale d'énergie qui est prélevée sur les moteurs de l'aéronef qui participent à la poussée de l'aéronef. Autrement dit, un moteur d'aéronef fournit, d'une part, une énergie propulsive pour permettre à l'aéronef de se déplacer et, d'autre part, une énergie non propulsive, qui est utilisée comme source principale d'énergie du réseau d'alimentation électrique.

Au fil des années, les besoins en énergie électrique se sont accrus pour un aéronef. Aussi, lorsque les moteurs de l'aéronef sont à bas régime, par exemple, lors de l'atterrissage, le réseau d'alimentation électrique n'est parfois pas suffisamment alimenté ce qui présente un inconvénient et ne permet pas l'alimentation des charges non essentielles (système multimédia des sièges pour passagers, etc.) ce qui présente un inconvénient pour les passagers de l'aéronef. Une solution immédiate pour éliminer cet inconvénient consiste à augmenter le régime des moteurs de l'aéronef lors de l'atterrissage mais cela augmente la consommation de carburant et n'est pas souhaité.

Il a été proposé par la demande de brevet FR 2 964 087 de la société TURBOMECA d'utiliser un groupe de puissance principal lorsque les moteurs ne suffisent pas à répondre aux besoins du réseau d'alimentation électrique. En outre, on connaît le document US 5,583,419 A (FR 2 721 450), qui est considéré comme l'art antérieur le plus proche et décrit les caractéristiques du préambule des revendications 1 et 2.

En pratique, les charges non essentielles sont délestées sur le groupe de puissance principal tandis que les charges essentielles sont alimentées par les moteurs propulsifs.

Un tel procédé de gestion des sources d'énergie n'est pas optimal car il requiert des algorithmes de délestage complexes à mettre en oeuvre car le délestage est réalisé en fonction des charges à alimenter. Le délestage est d'autant plus complexe qu'il doit également tenir compte des conditions de disponibilité d'une source d'énergie. En effet, le délestage des charges électriques doit être possible lorsqu'une ou plusieurs sources sont indisponibles. En pratique, de tels algorithmes de délestage ne permettent pas d'alimenter le plus grand nombre de charge électriques possible.

De plus, la perte d'une source implique à la ou les sources disponibles restantes d'avoir la capacité d'alimenter l'ensemble des charges jusqu'à la fin du vol. Il en résulte que la capacité de chaque source d'énergie doit largement excéder la consommation de la charge qui lui incombe, ce qui constitue un gaspillage d'énergie et pénalise le rendement énergétique de l'aéronef.

En outre, les systèmes de gestion d'énergie selon l'art antérieur sont complexes à mettre en oeuvre car il existe des modules de délestage différents pour les charges nécessitant un courant de plus de 15 Ampères et les charges nécessitant un courant de moins de 15 Ampères. Le délestage nécessite de tenir compte des compatibilités des sources avec les charges ce qui constitue un inconvénient.

### PRESENTATION GENERALE DE L'INVENTION

Afin d'éliminer au moins certains de ces inconvénients, l'invention concerne un procédé d'alimentation en énergie électrique d'un aéronef comportant une pluralité de charges à alimenter et un système d'alimentation, le système d'alimentation étant muni d'une pluralité de sources d'énergie et d'un module de gestion d'énergie embarqué, procédé caractérisé en ce que le module de gestion d'énergie commande une alimentation d'au moins une desdites charges par au moins deux sources d'énergie différentes en parallèle en cas d'augmentation des besoins en énergie, ladite charge étant initialement alimentée par une unique source d'énergie.

L'invention se rapporte également à un système d'alimentation en énergie électrique d'un aéronef muni d'une pluralité de charges à alimenter, ledit système d'alimentation comprenant une pluralité de sources d'énergie et un module de gestion d'énergie embarqué, le module de gestion d'énergie étant relié électriquement auxdites sources d'énergie et auxdites charges à alimenter, le module de gestion d'énergie étant agencé pour commander une alimentation d'au moins une desdites charges par au moins deux sources d'énergie différentes en parallèle en cas d'augmentation des besoins en énergie, ladite charge étant initialement alimentée par une unique source d'énergie.

Grâce à l'invention, une charge est alimentée de manière hybride par plusieurs sources d'énergie différentes. Il n'est avantageusement plus nécessaire de délester une charge sur une autre source d'énergie si la source d'énergie courante n'est pas suffisante. Un tel procédé d'alimentation procure une grande souplesse d'utilisation et permet d'alimenter l'ensemble des charges de manière optimale, sans génération excessive d'énergie ce qui améliore le rendement énergétique de l'aéronef. En outre, le module de gestion forme une source d'énergie universelle qui adapte de manière dynamique l'offre énergétique avec la demande électrique. Les sources d'énergie sont avantageusement mutualisées.

En outre, l'invention permet de s'affranchir plus facilement des risques d'interruptions sur le réseau électrique.

De plus, au lieu de réaliser un délestage sur une source d'énergie plus importante, on peut cumuler des sources électriques de plus faible valeur pour s'adapter aux besoins de la charge électrique. Ainsi, on limite la génération d'énergie inutile et, par voie de conséquence, la consommation en carburant de l'aéronef ce qui améliore son rendement énergétique.

De préférence, le système comprend des moyens de stockage d'énergie, le module de gestion étant agencé pour alimenter au moins une desdites charges par les moyens de stockage d'énergie en cas de besoin urgent d'énergie de ladite charge à alimenter. Des moyens de stockage d'énergie permettent de répondre à un besoin urgent en énergie sans engendrer une génération excessive d'énergie sur une longue période de temps.

Les moyens de stockage permettent de répondre à un besoin ponctuel en énergie qui n'était pas comblé avec les procédés de délestage selon l'art antérieur.

Selon un aspect préféré de l'invention, les moyens de stockage d'énergie se présentent sous la forme d'une pile d'énergie. Une telle pile présente un encombrement faible et est adaptée pour fournir, de manière rapide, une grande quantité d'énergie.

Selon un autre aspect de l'invention, lesdites au moins deux sources sont aptes à fournir un courant continu à ladite au moins une charge.

Selon un aspect de l'invention, lesdites au moins deux sources sont aptes à fournir un courant alternatif à ladite au moins une charge. L'utilisation de deux sources de courant alternatif va à l'encontre des préjugés de l'homme du métier qui considère que les phénomènes de couplage relatifs aux sources de courant alternatif interdisent une utilisation dans le domaine aéronautique.

De préférence, le module de gestion comporte des moyens de synchronisation des sources de courant alternatif destinés à alimenter simultanément la charge afin de limiter les phénomènes de couplage.

De manière préférée, le module de gestion d'énergie est autonome. Autrement dit, le module de gestion est adapté pour configurer les connexions entre les sources et les charges de manière dynamique. De préférence, le module de gestion comporte une base de données comprenant des règles métier adaptées pour sélectionner la meilleure configuration des connexions en fonction de l'état des sources et des charges.

De préférence, le module de gestion d'énergie est configuré pour adapter les connexions des sources d'énergie en fonction du courant consommé par les charges au cours du temps. Ainsi, la génération d'énergie par les sources est adaptée à la consommation des charges.

De préférence, le module de gestion d'énergie est configuré pour commander une augmentation de la génération d'énergie d'une des sources alimentant la charge si la consommation de la charge augmente.

De manière préférée, le système comporte au moins un module d'alimentation auxiliaire relié électriquement au module de gestion et à ladite pluralité de charges, le module de gestion d'énergie étant apte à alimenter directement des charges de haute puissance et indirectement des charges de faible et moyenne puissance via ledit module d'alimentation auxiliaire. Le module de gestion commande l'alimentation en haute puissance et délègue l'alimentation des charges de moyenne et faible puissance à un module auxiliaire qui réalise l'adaptation du courant demandé par les charges. Une telle architecture d'alimentation permet d'améliorer la qualité du courant fourni tout en augmentant la fiabilité de l'alimentation. Dans cet exemple, on considère qu'une charge à haute puissance consomme plus de 15 Ampères.

De préférence encore, le système comporte au moins un module d'urgence relié électriquement au module de gestion et à au moins une charge d'urgence, le module de gestion d'énergie étant apte à alimenter indirectement la charge d'urgence via le module d'urgence. De préférence, le module d'urgence comporte également une alimentation directe par une source d'énergie d'urgence.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un module de gestion d'énergie embarqué relié électriquement à des sources d'énergie et à des charges à alimenter ; et
- la figure 2 est une autre représentation schématique d'un module de gestion avec des modules d'alimentation auxiliaire et un module d'urgence.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

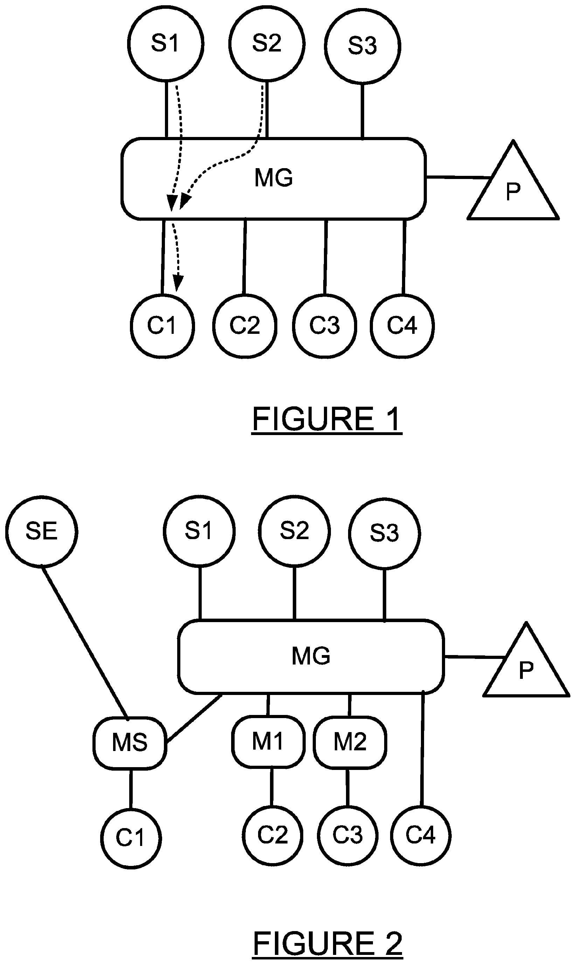

L'invention va être présentée en référence à la figure 1 illustrant un aéronef comportant un système d'alimentation en énergie électrique et une pluralité de charges à alimenter C1, C2, C3 et C4. Le système d'alimentation est muni d'une pluralité de sources d'énergie S1, S2, S3.

Les sources d'énergie S1, S2, S3 sont de différentes ou de mêmes natures et peuvent se présenter, par exemple, sous la forme de générateurs de moteur propulsif de l'aéronef, d'un groupe de puissance principal, de préférence, de classe moteur. Il va de soi que d'autres types de sources d'énergie pourraient convenir.

En outre, les sources d'énergie S1, S2, S3 peuvent fournir une énergie électrique sous forme de courant continu ou alternatif, une énergie pneumatique sous forme d'air comprimé, une énergie mécanique sous forme de couple et puissance délivrés sur arbre de puissance. Le stockage de ces énergies est assuré par des dispositifs de type batteries ou supercondensateur pour l'énergie électrique, réservoir sous pression pour l'énergie pneumatique et volant d'inertie pour l'énergie mécanique.

Comme présenté dans le préambule de la présente demande, un équipement de l'aéronef (actionneurs mécaniques, commandes de vol, système multimédia des sièges pour passagers, ventilation de la cabine, etc.) est considéré comme une charge qui consomme de l'énergie électrique, pneumatique ou mécanique. Dans cet exemple, quatre charges C1-C4 sont représentées à la figure 1.

Afin de permettre une gestion raisonnée de l'énergie, qu'elle soit électrique, pneumatique ou mécanique, dans le réseau d'alimentation correspondant, les charges ont deux natures possibles : les charges dites « essentielles » qui sont importantes pour le fonctionnement de l'aéronef (commande de vol, etc.) et les charges dites « non essentielles » qui sont moins importantes pour le fonctionnement de l'aéronef (système multimédia des sièges pour passagers, ventilation de la cabine, etc.). Les charges sont également ségréguées selon leur installation géographique pour être alimentées par les sources les plus proches, et éviter, autant que possible, la perte de redondance et/ou d'équipements fonctionnellement connexes.

Selon l'invention, toujours en référence à la figure 1, le système d'alimentation comporte un module de gestion d'énergie embarqué, référencé MG, qui est relié électriquement auxdites sources d'énergie S1, S2, S3 et auxdites charges à alimenter C1-C4.

Le module de gestion d'énergie MG se présente sous la forme d'un calculateur physique comportant une mémoire dans laquelle est enregistré un programme de gestion des sources d'énergie S1, S2, S3 en fonction des besoins en énergie des charges à alimenter C1-C4.

Le module de gestion d'énergie MG est adapté pour commander une alimentation d'au moins une desdites charges C1-C4 par au moins deux sources d'énergie différentes en parallèle S1, S2, S3. Autrement dit, une charge est alimentée par deux sources d'énergie différentes. On parle d'alimentation hybride des charges de l'aéronef. En référence à la figure 1, le module de gestion d'énergie MG conduit l'énergie des sources S1 et S2 vers la charge C1 afin de l'alimenter.

De manière préférée, le module de gestion d'énergie MG met en oeuvre une alimentation hybride d'une charge C1 lorsque ladite charge C1 requiert une énergie électrique de plus en plus importante qui dépasse la capacité de la source d'énergie S1 qui alimente, à elle seule, la charge C1 en conditions normales d'utilisation.

Selon l'invention, le module de gestion MG comporte des moyens (non représentés sur les figures) de mesure de puissance adaptés pour mesurer la puissance demandée par chaque, de type courant, tension, débitmètre ou couple-mètre par exemple. Si la quantité de puissance demandée dépasse un seuil de puissance prédéterminé, le module de gestion MG commande à une autre source d'énergie, ici la source S2, de répondre aux besoins de la charge C1.

Le module de gestion MG est adapté pour mettre en correspondance les besoins de charges C1-C4 avec l'offre énergétique des sources d'énergie S1-S3 tout en limitant les pertes énergétiques. Grâce au procédé selon l'invention, l'ensemble des charges est alimenté tout en évitant une génération excessive d'énergie qui augmenterait la consommation en carburant de l'aéronef. Autrement dit, le module de gestion MG permet d'adapter l'alimentation des charges pour améliorer le rendement énergétique de l'aéronef.

De manière préférée, le module de gestion d'énergie MG est autonome pour mettre en relation certaines sources d'énergie S1-S3 avec certaines charges C1-C4. De préférence, le module de gestion MG comporte une base de données de règles de métier qui indique plusieurs configurations d'alimentations possibles en fonction de l'état des sources S1-S3 et des charges C1-C4. Ainsi, en fonctionnement, le module de gestion MG analyse l'état courant des sources S1-S3 et des charges C1-C4 et en déduit la configuration d'alimentation la plus adaptée, en utilisant par exemple les tables de gestions de configuration qui déterminent d'une part quels sont les équipements présents et d'autre part leurs consommations, nominale à chaque phase du vol et maximale avec les différents scénarii d'utilisation.

Dans un premier exemple de gestion d'énergie électrique, la charge C1 est alimentée par deux sources de courant continu S1, S2. Selon cette hypothèse, les courants continus issus des sources S1-S2 s'additionnent de manière connue de l'homme du métier.

Dans un deuxième exemple de gestion d'énergie électrique, la charge C1 est alimentée par deux sources de courant alternatif S1, S2. Selon une hypothèse, les courants alternatifs issus des sources sont préalablement convertis en courant continus avant d'être additionnés. A cet effet, le module de gestion MG comporte des transformateurs AC/DC.

Selon une autre hypothèse, les courants alternatifs issus des sources sont préalablement synchronisés avant d'être additionnés afin de limiter le phénomène de couplage. Une addition de deux sources de courant alternatif est réputée comme impropre à une utilisation aéronautique du fait du phénomène de couplage. En effet, le domaine aéronautique exige des sources d'énergie stables et fiables dénuées d'effets parasites tels que le couplage. Selon l'invention, il est proposé d'aller à l'encontre de ce préjugé en assurant une synchronisation optimale des sources à additionner afin de limiter les pertes lors du couplage. De manière avantageuse, le module de gestion MG comporte des moyens de synchronisation adaptés pour conditionner un courant alternatif en vue de son addition à un autre courant alternatif. La structure d'un tel système de synchronisation peut s'appuyer sur l'adaptation en fréquence et par la phase des sources alternatives. Le principe est de faire évoluer les sources à la même fréquence dans un premier temps, puis au passage d'une phase d'une des sources, de synchroniser l'autre source. Cela permet de réduire des pertes électriques au moment du couplage.

De manière avantageuse, grâce à l'invention, si la charge C1 est alimentée en courant alternatif par la source électrique S1 et nécessite de plus en plus d'énergie pour fonctionner. Le module de gestion MG commande la source S2 pour répondre aux besoins de la charge C1. Le courant alternatif de la source S2 est synchronisé à celui de la source S1 avant d'être additionné.

Dans un troisième exemple, la charge C1 est alimentée par une source de courant continu S1 en régime normal. En cas de besoin, le module de gestion MG commande une source de courant alternatif S2 pour fournit un courant continu supplémentaire à la charge C1 après conversion par un transformateur AC/DC du module de gestion MG.

Selon un aspect de l'invention, en référence à la figure 1, l'aéronef comporte des moyens de stockage d'énergie, de préférence une pile d'énergie P. Le module de gestion MG est configuré pour alimenter au moins une desdites charges C1-C4 par les moyens de stockage d'énergie P en cas de besoin urgent d'énergie de ladite charge à alimenter. De tels moyens de stockage P permettent de répondre à bref délai à un besoin d'énergie ponctuel d'une des charges C1-C4, lorsque, par exemple, plusieurs équipements démarrent ou actionnent en même temps.

En référence à la figure 2, le système d'alimentation comporte deux modules d'alimentation auxiliaire M1, M2 reliés électriquement au module de gestion MG et aux charges C1-C4 afin de pouvoir adapter l'énergie fournie par le module de gestion MG à des charges de moyenne et de faible puissance. Dans cet exemple, comme illustré à la figure 2, le module de gestion d'énergie MG alimente directement la charge de haute puissance C4 et indirectement la charge C2 de faible puissance via le module d'alimentation auxiliaire M1 et la charge C3 de moyenne puissance via le module d'alimentation auxiliaire M2. La charge de haute puissance C4 consomme un courant de plus de 15A contrairement aux charges C2 et C3.

De préférence encore, le système d'alimentation comporte au moins un module d'urgence MS relié électriquement au module de gestion MG et à au moins une charge d'urgence C1, le module de gestion d'énergie MG alimentant indirectement la charge d'urgence via le module d'urgence MS. De préférence, le module d'urgence MS est également alimenté directement par une source d'urgence SE du type RAT de son abréviation anglaise « Ram Air Turbine ».

## Revendications

1. Procédé d'alimentation en énergie électrique d'un aéronef comportant une pluralité de charges à alimenter (C1-C4) et un système d'alimentation, le système d'alimentation étant muni d'une pluralité de sources d'énergie (S1, S2, S3) et d'un module de gestion d'énergie embarqué (MG), procédé **caractérisé en ce que** le module de gestion d'énergie (MG) commande une alimentation d'au moins une desdites charges (C1-C4) par au moins deux sources d'énergie différentes en parallèle (S1, S2, S3) en cas d'augmentation des besoins en énergie de ladite charge, ladite charge (C1-C4) étant initialement alimentée par une unique source d'énergie (S1, S2, S3).

2. Système d'alimentation en énergie électrique d'un aéronef muni d'une pluralité de charges à alimenter (C1-C4), ledit système d'alimentation comprenant une pluralité de sources d'énergie (S1, S2, S3) et un module de gestion d'énergie embarqué (MG), le module de gestion d'énergie (MG) étant relié électriquement auxdites sources d'énergie (S1, S2, S3) et auxdites charges à alimenter (C1-C4), **caractérisé en ce que** le module de gestion d'énergie (MG) comprend des moyens de mesure de la puissance demandée par chaque charge, et est agencé pour commander une alimentation d'au moins une desdites charges (C1-C4) par au moins deux sources d'énergie différentes en parallèle (S1, S2, S3) si la quantité de puissance demandée par ladite charge (C1-C4) mesurée par lesdits moyens de mesure de puissance dépasse un seuil de puissance prédéterminé, ladite charge (C1-C4) étant initialement alimentée par une unique source d'énergie (S1, S2, S3).

3. Système selon la revendication 2, comprenant des moyens de stockage d'énergie (P), le module de gestion (MG) étant agencé pour alimenter au moins une desdites charges (C1-C4) par les moyens de stockage d'énergie (P) en cas de besoin urgent d'énergie de ladite charge à alimenter.

4. Système selon la revendication 2, dans lequel les moyens de stockage d'énergie (P) se présentent sous la forme d'une pile d'énergie.

5. Système selon l'une des revendications 2 à 4, dans lequel lesdites au moins deux sources (S1, S2, S3) sont aptes à fournir un courant alternatif à ladite au moins une charge (C1-C4).

6. Système selon l'une des revendications 2 à 5, dans lequel lesdites au moins deux sources (S1, S2, S3) sont aptes à fournir un courant continu à ladite au moins une charge (C1-C4).

7. Système selon l'une des revendications 2 à 6, dans lequel le module de gestion d'énergie (MG) est autonome.

8. Système selon l'une des revendications 2 à 7, dans lequel le module de gestion d'énergie (MG) est agencé pour adapter les connexions des sources d'énergie (S1, S2, S3) en fonction du courant consommé par les charges (C1-C4) au cours du temps.

9. Système selon l'une des revendications 2 à 8, comprenant en outre, au moins un module d'alimentation auxiliaire (M1, M2) relié électriquement au module de gestion (MG) et à ladite pluralité de charges (C1-C4), le module de gestion d'énergie (MG) étant apte à alimenter directement des charges de haute puissance et indirectement des charges de faible et moyenne puissance via ledit module d'alimentation auxiliaire (M1, M2).

10. Système selon l'une des revendications 2 à 9, comportant au moins un module d'urgence (MS) relié électriquement au module de gestion (MG) et à au moins une charge d'urgence, le module de gestion d'énergie (MG) étant apte à alimenter indirectement la charge d'urgence via le module d'urgence (MS).

## Patentansprüche

1. Verfahren zur Versorgung eines Flugzeugs mit elektrischer Energie, eine Vielzahl von zu versorgenden Ladungen (C1-C4) und ein System zur Versorgung beinhaltend, wobei das System zur Versorgung mit einer Vielzahl von Energiequellen (S1, S2, S3) und mit einem eingebauten Energieverwaltungsmodul (MG) ausgestattet ist, wobei das Verfahren **dadurch gekennzeichnet ist, dass** das Energieverwaltungsmodul (MG) eine Versorgung mindestens einer der Ladungen (C1-C4) durch mindestens zwei unterschiedliche parallele Energiequellen (S1, S2, S3) im Falle einer Anstiegs des Energiebedarfs der Ladung steuert, wobei die Ladung (C1-C4) anfangs durch eine einzige Energiequelle (S1, S2, S3) versorgt wird.

2. System zur Versorgung eines Flugzeugs mit elektrischer Energie, mit einer Vielzahl von zu versorgenden Ladungen (C1-C4) ausgestattet, wobei das System zur Versorgung eine Vielzahl von Energiequellen (S1, S2, S3) und ein eingebautes Energieverwaltungsmodul (MG) umfasst, wobei das Energieverwaltungsmodul (MG) mit den Energiequellen (S1, S2, S3) und mit den zu versorgenden Ladungen (C1-C4) elektrisch verbunden ist, **dadurch gekennzeichnet, dass** das Energieverwaltungsmodul (MG) Mittel zum Messen der Leistung umfasst, die von jeder Ladung angefragt wird, und angeordnet ist, um eine Versorgung mindestens einer der Ladungen (C1-C4) durch mindestens zwei unterschiedliche parallele Energiequellen (S1, S2, S3) zu steuern, wenn die von der Ladung (C1-C4) angefragte Leistungsmenge, die von den Mitteln zum Messen einer Leistung gemessen wird, eine vorbestimmte Leistungsschwelle überschreitet, wobei die Ladung (C1-C4) anfangs durch eine einzige Energiequelle (S1, S2, S3) versorgt wird.

3. System nach Anspruch 2, Energiespeichermittel (P) umfassend, wobei das Verwaltungsmodul (MG) angeordnet ist, um mindestens eine der Ladungen (C1-C4) durch die Energiespeichermittel (P) im Falle eines dringenden Energiebedarfs der zu versorgenden Ladung zu versorgen.

4. System nach Anspruch 2, wobei die Energiespeichermittel (P) in Form einer Energiebatterie vorliegen.

5. System nach einem der Ansprüche 2 bis 4, wobei die mindestens zwei Quellen (S1, S2, S3) geeignet sind, um der mindestens einen Ladung (C1-C4) einen Wechselstrom zu liefern.

6. System nach einem der Ansprüche 2 bis 5, wobei die mindestens zwei Quellen (S1, S2, S3) geeignet sind, um der mindestens einen Ladung (C1-C4) einen Gleichstrom zu liefern.

7. System nach einem der Ansprüche 2 bis 6, wobei das Energieverwaltungsmodul (MG) autonom ist.

8. System nach einem der Ansprüche 2 bis 7, wobei das Energieverwaltungsmodul (MG) angeordnet ist, um die Anschlüsse der Energiequellen (S1, S2, S3) in Abhängigkeit vom durch die Ladungen (C1-C4) im Laufe der Zeit verbrauchten Strom anzupassen.

9. System nach einem der Ansprüche 2 bis 8, weiter umfassend mindestens ein Hilfsversorgungsmodul (M1, M2), das mit dem Verwaltungsmodul (MG) und mit der Vielzahl von Ladungen (C1-C4) elektrisch verbunden ist, wobei das Energieverwaltungsmodul (MG) geeignet ist, um Hochleistungsladungen direkt und Gering- und Mittelleistungsladungen über das Hilfsversorgungsmodul (M1, M2) indirekt zu versorgen.

10. System nach einem der Ansprüche 2 bis 9, mindestens ein Notfallmodul (MS) beinhaltend, das mit dem Verwaltungsmodul (MG) und mit mindestens einer Notfallladung elektrisch verbunden ist, wobei das Energieverwaltungsmodul (MG) geeignet ist, um die Notfallladung über das Notfallmodul (MS) indirekt zu versorgen.

## Claims

1. Method for supplying electrical energy to an aircraft comprising a plurality of loads to be powered (C1-C4) and a power supply system, the power supply system being equipped with a plurality of power sources (S1, S2, S3) and an on-board energy management module (MG), method **characterised in that** the energy management module (MG) controls a power supply to at least one of said loads (C1-C4) using at least two different power sources in parallel (S1, S2, S3) in the event of increased energy requirements of said load, said load (C1-C4) initially being powered by a single power source (S1, S2, S3).

2. System for supplying electrical energy to an aircraft that is equipped with a plurality of loads to be powered (C1-C4), said power supply system comprising a plurality of power sources (S1, S2, S3) and an on-board energy management module (MG), the energy management module (MG) being electrically connected to said power sources (S1, S2, S3) and to said loads to be powered (C1-C4), **characterised in that** the energy management module (MG) comprises means for measuring the power required by each load, and is arranged so as to control a supply of power to at least one of said loads (C1-C4) using at least two different power sources in parallel (S1, S2, S3) if the amount of power required by said load (C1-C4) measured by said means for measuring the power exceeds a predetermined power threshold, said load (C1-C4) initially being powered by a single power source (S1, S2, S3).

3. System according to claim 2, comprising means for storing energy (P), the management module (MG) being arranged so as to power at least one of said loads (C1-C4) using the energy storage means (P) in the event of said load to be powered having an urgent energy requirement.

4. System according to claim 2, wherein the means for storing energy (P) are in the form of an energy cell.

5. System according to any of claims 2 to 4, wherein said at least two sources (S1, S2, S3) are capable of supplying an alternating current to said at least one load (C1-C4).

6. System according to any of claims 2 to 5, wherein said at least two sources (S1, S2, S3) are capable of supplying a direct current to said at least one load (C1-C4).

7. System according to any of claims 2 to 6, wherein the energy management module (MG) is stand-alone.

8. System according to any of claims 2 to 7, wherein the energy management module (MG) is arranged so as to adapt the connections of the power sources (S1, S2, S3) according to the current consumed by the loads (C1-C4) over time.

9. System according to any of claims 2 to 8, further comprising at least one auxiliary power supply module (M1, M2) which is electrically connected to the management module (MG) and to said plurality of loads (C1-C4), the energy management module (MG) being capable of directly powering the high-power loads and indirectly powering the low and medium-power loads via said auxiliary power supply module (M1, M2).

10. System according to any of claims 2 to 9, comprising at least one emergency module (MS) which is electrically connected to the management module (MG) and to at least one emergency load, the energy management module (MG) being capable of indirectly powering the emergency load via the emergency module (MS).
